(19) Europäisches Patentamt European Patent Office Office européen des brevets

(11) **EP 4 560 276 B1**

(12) **FASCICULE DE BREVET EUROPEEN**

(45) Date de publication et mention de la délivrance du brevet:
**04.02.2026 Bulletin 2026/06**

(21) Numéro de dépôt: **24214145.5**

(22) Date de dépôt: **20.11.2024**

(51) Classification Internationale des Brevets (IPC):
**G01J 3/02** *(2006.01)* **G01J 3/04** *(2006.01)*
**G02B 6/28** *(2006.01)*

(52) Classification Coopérative des Brevets (CPC):
**G01J 3/0218; G01J 3/0205; G01J 3/0221; G01J 3/024; G01J 3/04;** G02B 6/08

(54) **COMPOSANT OPTIQUE POUR UN INSTRUMENT D'OBSERVATION OU DE MESURE POUR L'HOMOGÉNÉISATION DES NON-UNIFORMITÉS D'UN ÉCHANTILLON SPATIAL POUR OBSERVATION MULTI SPECTRALE**

OPTISCHE KOMPONENTE FÜR EIN BEOBACHTUNGS- ODER MESSINSTRUMENT ZUR HOMOGENISIERUNG VON UNGLEICHMÄSSIGKEITEN EINER RÄUMLICHEN PROBE ZUR MULTISPEKTRALEN BEOBACHTUNG

OPTICAL COMPONENT FOR AN OBSERVATION OR MEASURING INSTRUMENT FOR HOMOGENISING NON-UNIFORMITIES OF A SPATIAL SAMPLE FOR MULTI-SPECTRAL OBSERVATION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.11.2023 FR 2312909**

(43) Date de publication de la demande:
**28.05.2025 Bulletin 2025/22**

(73) Titulaires:
- **Thales**
  **92190 Meudon (FR)**
- **Centre National de la Recherche Scientifique**
  **75016 Paris (FR)**

(72) Inventeurs:
- **BENARD, Hervé**
  **06156 Cannes la Bocca (FR)**
- **SERRE, Denis**
  **06156 Cannes la Bocca (FR)**
- **DOYA, Valérie**
  **06200 Nice (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A1- 3 936 841**

- **SIERK BERND ET AL: "The Copernicus CO2M mission for monitoring anthropogenic carbon dioxide emissions from space", PROCEEDINGS OF THE SPIE, SPIE, US, vol. 11852, 11 June 2021 (2021-06-11), pages 118523M - 118523M, XP060144945, ISSN: 0277-786X, ISBN: 978-1-5106-5738-0, DOI: 10.1117/12.2599613**
- **GULDIMANN BENEDIKT ET AL: "Smart slit assembly for high-resolution spectrometers in space", PROCEEDINGS OF SPIE; [PROCEEDINGS OF SPIE ISSN 0277-786X VOLUME 10524], SPIE, US, vol. 9754, 16 March 2016 (2016-03-16), pages 97540B - 97540B, XP060069898, ISBN: 978-1-5106-1533-5, DOI: 10.1117/12.2209336**
- **SIERK B ET AL: "Carbonsat instrument pre-developments: towards monitoring carbon dioxide and methane concentrations from space", PROCEEDINGS OF SPIE; [PROCEEDINGS OF SPIE ISSN 0277-786X VOLUME 10524], SPIE, US, vol. 10562, 25 September 2017 (2017-09-25), pages 105622C - 105622C, XP060093814, ISBN: 978-1-5106-1533-5, DOI: 10.1117/12.2296198**

# EP 4 560 276 B1

## Description

### Contexte technique

L'invention s'inscrit dans le domaine des instruments de mesure adaptés à être dirigés vers une scène à observer et exploitant les ondes électromagnétiques dans différentes gammes - on parle de mesure multispectrale ou hyperspectrale.

De tels instruments peuvent être utilisés pour former des images - l'instrument est donc un imageur spectral - et/ou pour effectuer des mesures, qui permettent par exemple de reconnaître une composition chimique dans la scène observée.

L'appareil de mesure peut être embarqué dans un satellite et en particulier observer la terre et son atmosphère. Le satellite peut tourner autour de la terre ou être géostationnaire.

Le mode d'acquisition de l'instrument de mesure concerné par l'invention est souvent le mode à champ linéaire défilant ou, selon la terminologie de langue anglaise, le mode d'acquisition push-broom. Une ligne de pixels est utilisée pour examiner successivement plusieurs positions le long d'un axe de trajectoire dit axe along track (ou ALT). Mais l'instrument peut aussi fonctionner, notamment, selon un mode de prise de vues dit « step and stare ». Dans ce cas, pendant le temps d'intégration d'une ligne d'échantillons au sol, la ligne de visée du satellite est fixe. Néanmoins, dans le présent document, on va décrire les dispositifs et principes en référence à un défilement ou du moins à un défilement potentiel, et il sera entendu qu'un tel défilement n'est pas indispensable à la définition la plus large de l'invention.

Le principe de l'observation envisagée d'une scène distante défilante ou fixe est dans ce contexte l'utilisation, classique, d'un télescope qui capte la lumière de la scène distante et la focalise, formant une image de la scène. Mais la lumière focalisée est traitée par une fente optique définie par un axe longitudinal et constituant l'entrée d'un spectromètre.

Cette fente isole une petite tranche de la scène et assure donc un rôle de filtre spatial, définissant l'unité élémentaire de l'image ou échantillon de mesure dans la direction de la trajectoire (along track) qui est transversale à son axe longitudinal (axe dit across track ou ACT). Les deux axes sont souvent perpendiculaires même si cela n'est pas indispensable et d'ailleurs l'inclinaison exacte peut évoluer au cours du temps.

Le défilement de la scène, quand il y a un tel défilement, permet de l'observer progressivement dans sa dimension transversale à la fente, le long de la trajectoire.

A sa sortie de la fente, la lumière, ainsi filtrée spatialement, est amenée à un disperseur, qui peut utiliser par exemple un prisme ou un réseau de diffraction, effectuant une dispersion perpendiculairement à la direction longitudinale de la fente. La lumière est ensuite analysée sur un détecteur matriciel, qui crée des signaux électriques.

Pour une position donnée de la scène vis-à-vis de la fente, la lumière est, en fonction de la longueur d'onde, projetée à différentes positions selon une direction transversale à la direction de la fente, et sur le détecteur. Celui-ci convertit l'intensité lumineuse en une valeur numérique.

Les longueurs d'onde observées peuvent notamment aller du proche UV au proche infra-rouge ($0{,}15\,\mu\mathrm{m}$ à $3\,\mu\mathrm{m}$). On souhaite observer des gaz atmosphériques, qui ont une signature spectrale particulière dans le domaine de longueurs d'ondes sus-mentionné, grâce à laquelle il est possible d'évaluer leur concentration.

Plus en détail, quand la scène est ainsi défilante et observée à travers une fente, elle peut être considérée comme une somme incohérente ou faiblement cohérente de sources ponctuelles réparties en x et y, la dimension x étant parallèle à la fente, et la dimension y, très limitée mais néanmoins existante - la fente ayant une largeur non nulle - étant la dimension perpendiculaire à la fente.

Or on souhaite que la réponse du montage, appelée aussi réponse ou fonction de transfert de l'instrument, ne dépende pas de la scène et en particulier de la géométrie de la scène, ou des contrastes dans celle-ci, liés à des différences importantes d'intensité lumineuse ou luminance. Or bien que la fente soit de largeur faible, elle ne l'est pas suffisamment pour que l'entrée de la fente soit illuminée de manière strictement homogène selon la direction y.

Pour les spectro-imageurs hyper résolus spectralement (typiquement moins de 1 nm par échantillon spectral), la maitrise de la réponse spectrale de l'instrument doit être excellente. Une erreur de 1 à 2 % sur la connaissance de la réponse de l'instrument peut en effet suffire à induire une erreur de détermination de la concentration de gaz égale à la précision recherchée de l'instrument.

La réponse spectrale de l'instrument ou du spectromètre RSI peut s'écrire approximativement :

$$RSI(x,y) = s(y) \otimes PSF(x,y) \otimes PRF(x,y) \text{ (le symbole } \otimes \text{ représente la convolution)}$$

où
s(y) représente la fonction de la fente. Cela correspond à l'image de la fonction d'éclairement de la fente sur le détecteur. Dans cette équation, on suppose qu'elle ne dépend pas de x. Sur une scène uniforme selon l'axe y, elle est exprimée avec une fonction porte (ou fonction rectangle) dont les dimensions correspondent simplement à la taille de la fente le long de la trace, multipliée par le grandissement transverse du spectromètre.

PSF, qui signifie « point spread function », ou fonction d'étalement de point, est la réponse impulsionnelle du système optique en aval de la fente, qui projette une image de celle-ci sur le détecteur ou photocapteur. C'est une fonction qui dépend de la valeur du champ (x) mais aussi de la valeur du champ (y) aussi appelé champ spectral.

PRF signifie « photo response function », ou fonction de réponse photographique et est la réponse radiométrique spatiale de la zone de détection utilisée comme échantillon spectral. On peut l'associer en première approximation à une fonction porte.

Au travers de la fonction RSI ci-dessus, on voit que s(y) et donc RSI varie selon que la scène est uniforme selon y ou que la scène n'éclaire qu'une fraction de la fente selon y. La fonction RSI dépend donc de la scène ce qui n'est pas souhaité.

Afin de limiter l'impact de la non-uniformité spatiale (pour une longueur d'onde donnée dans la bande d'observation) de la scène en matière d'intensité sur la fonction RSI, on souhaite que la fente répartisse son éclairement en sortie, quelle que soit la répartition de son éclairement en entrée : on parle alors de scène homogénéisée. Une fonction d'homogénéisation devrait être réalisée par la fente elle-même, de préférence.

On connait du document Sentinel-5/UVNS ICSO 2018- Proc. Of SPIE Vol. 11180 1118004-1 un principe d'homogénéisation par fente à miroirs. Cette homogénéisation peut être qualifiée d'homogénéisation 1D, puisqu'il y a homogénéisation selon une dimension, en l'occurrence la dimension ALT along-track ou le long de la trace (selon y), grâce à la propagation selon la dimension de propagation de la lumière.

L'homogénéisation 1D à base de miroirs, présente toutefois deux problèmes: Les réflexions en incidence rasante sur les miroirs génèrent des pertes de transmission et polarisent la lumière, ce qui est un problème pour un spectro-imageur, et l'homogénéisation se fait selon l'axe y (spectral) mais pas selon x. De fait, en sortie de l'homogénéiseur - c'est-à-dire en sortie de la fente, on récupère une source focalisée selon y mais défocalisée en x. Cette défocalisation étant inacceptable, il faut la compenser par la solution optique. Il s'agit là d'une part d'une contrainte significative sur la solution globale, et d'autre part d'une limitation intrinsèque: des variabilités ACT (across track, selon x) de la scène impactent la RSI par l'intermédiaire du paramètre PRF(x,y).

On connait aussi de WO2020027657A1 une autre méthode d'homogénéisation selon une unique direction, en l'occurrence selon ALT (selon y), à l'aide d'une optique astigmate, contraignante.

Dans ces deux solutions, il est nécessaire de traiter distinctement les conjugaisons optiques ALT et ACT (selon x). Il n'y a pas d'homogénéisation selon l'axe across-track. Cette technique d'homogénéisation est donc peu performante. Des variabilités ACT (selon x) de la scène impactent toujours la RSI par l'intermédiaire du paramètre PRF(x,y).

Il est également connu par exemple de EP3936841_A1 un montage basé sur des fibres optiques multimodes. On sait que les fibres optiques sont des guides d'ondes optiques utilisés usuellement. Ce document mentionne des sections de fibre rectangulaires. Le caractère multimode, aux longueurs d'onde d'intérêt pour le spectro-imageur, est aussi mentionné. Il est lié aux dimensions transversales de la fibre.

Dans EP3936841_A1, une homogénéisation selon ACT et ALT est recherchée par la longueur de la fibre et un montage impliquant des courbes dans la fibre, entre son entrée et sa sortie.

Mais les fibres longues sont encombrantes et donc peu pratiques, en particulier pour un emploi dans un satellite d'observation.

Sur le spectromètre imageur du satellite CO2M (Copernicus Anthropogenic Carbon Dioxide Monitoring) il est prévu d'intégrer une fente d'entrée homogénéisatrice d'uniformités sur deux dimensions consistant en un alignement de fibres optiques multimodes courtes à section, à nouveau, rectangulaire, comme cela est décrit dans le document "The Copernicus CO2M mission for monitoring anthropogenic carbon dioxide emissions from space", Sierk et al, Proc of SPIE vol. 11852, 118523M (XP060144945). La forme rectangulaire permet de maximiser le flux d'énergie transporté entre deux plans. On appelle cette fente un homogénéisateur à fente bidimensionnel (2DSH). Les fibres effectuent une homogénéisation par morceaux de la scène d'entrée dans les directions spectrale et spatiale. La fente est composée d'un réseau de 120 fibres rectangulaires empilées le long du champ de vision dans la direction ACT. La lumière collectée sur cet échantillon subit de multiples réflexions lorsqu'elle se propage le long de la fibre qui fait la moyenne du contraste de la scène pour produire une image en champ proche spatialement homogène. L'homogénéisation est réalisée dans la direction spectrale (ALT) et aussi spatiale (direction ACT) par morceaux sur chaque échantillon spatial ACT. Cependant les fibres sont relativement courtes, ce qui ne facilite pas le couplage entre modes et donc limite la performance d'homogénéisation en comparaison avec le principe utilisé dans EP3936841_A1.

**Définition de l'invention** - **avantages associés**

Pour optimiser ces systèmes, il est apparu souhaitable d'optimiser l'homogénéiseur lui-même, en recherchant à améliorer l'homogénéité de la fonction de transfert sur toute la section du guide d'ondes optique.

La solution proposée consiste à utiliser des guides d'ondes optiques, comme dans l'art antérieur, similaires les uns aux autres, de longueurs typiques de 1 à 15 cm entre leur entrée et leur sortie, et dont la section, invariante de l'entrée à la sortie dérive d'une manière ou d'une autre d'un rectangle, les côtés de même dimension des rectangles étant placés parallèlement (soit les rectangles voisins sont juxtaposés par les grands côtés, soit, comme cela est proposé dans l'art antérieur et comme cela est avantageux, ils le sont par les petits côtés).

Cette solution maximise la puissance recueillie dans la fente, qui est traitée sous la forme d'une succession de tronçons de fente, qui sont naturellement des parallélogrammes successifs, et plus simplement des rectangles successifs.

Ainsi, il est proposé un composant optique pour un instrument d'observation ou de mesure dans une gamme spectrale, le composant comprenant une pluralité de guides d'ondes optiques de sections toutes constantes entre chacune une entrée et une sortie du guide d'ondes (géométriquement, les guides d'ondes sont délimités par une génératrice fermée formant un périmètre de la section et la section est invariante entre l'entrée et la sortie), au comportement multimode dans ladite gamme spectrale, et dont les extrémités d'entrée sont alignées le long d'un axe qui est un axe longitudinal médian d'une fente optique dudit composant optique.

Lesdites sections de guides d'ondes ont chacune deux bases opposées l'une à l'autre sensiblement rectilignes et parallèles à l'axe de la fente - ces deux bases étant typiquement les grands côtés d'un rectangle, sur les deux flancs de la fente. Cela est dicté par la volonté très naturelle d'occuper au mieux l'espace de la fente et cela s'est donc matérialisé dans l'art antérieur par la forme strictement rectangulaire des fibres optiques utilisées : leurs grands côtés constituent des bases opposées parallèles l'axe de la fente optique.

Mais de manière originale ici, le composant optique est tel que chacune des sections de guide d'ondes a, pour relier lesdites deux bases et former le périmètre du guide d'ondes, au moins une face inclinée (si on conserve une forme polygonale) ou une face incurvée (si l'on décide d'introduire des convexités ou des concavités), de manière à ce que ladite section soit distincte d'un rectangle.

Cela permet, selon les travaux des inventeurs, de grandement améliorer la fonction d'homogénéisation, même avec des guides d'ondes optiques courts et maintenus rectilignes entre leur entrée et leur sortie. Sans vouloir être tenu par une théorie, il est affirmé que la géométrie proposée permet la formation de modes ergodiques de propagation des ondes de ladite gamme spectrale dans des fibres ou autres guides ayant cette géométrie de section, ces modes de propagation favorisant l'homogénéisation. Plus précisément, on lutte par la géométrie proposée (des angles internes entre des facettes planes successives et/ou une face incurvée de manière à ce que ladite section soit distincte d'un rectangle) contre la ségrégation des modes de propagation en deux familles, l'une selon le grand côté du rectangle et l'autre selon le petit côté du rectangle.

Cela est particulièrement original et change les perspectives dans le domaine des fentes homogénéisatrices, puisqu'on obtient une fente toujours aussi efficace pour capter la lumière, mais qui en plus homogénéise sans avoir recours à des fibres optiques longues.

En effet, alors que la géométrie de la fente et les techniques usuelles de fabrication encouragent à utiliser des guides d'ondes à section rectangulaire pour facilement observer toute la scène et maximiser l'énergie collectée avec une géométrie élémentaire de guide d'ondes, la solution proposée s'écarte de cette géométrie rectangulaire, et permet d'obtenir, de manière remarquable et très originale, une homogénéisation de très bonne qualité tout en conservant une très bonne collecte d'énergie et une observation complète de la scène.

Il est possible de n'utiliser qu'un discret écart vis-à-vis de la forme d'un rectangle de référence dans lequel est inscrit le guide d'onde, pour maintenir une bonne collecte de l'énergie et conserver des processus de fabrication courants. Mais dès qu'un écart est créé, par exemple par un méplat coupant un sommet du rectangle, même s'il est discret, l'homogénéisation est observée. Il est estimé, comme mentionné plus haut, que cela est lié au fait que la géométrie purement rectangulaire présente le défaut de confiner les modes en deux familles de modes, et que l'écart vis-à-vis de cette géométrie libère les modes en une diversité plus grande, non limitée à deux familles distinctes.

Ainsi, le composant optique comprenant la dissymétrie mentionnée ci-dessus est un homogénéiseur 2D qui se base sur des guides optiques multimodes arrangés selon une ligne, de manière à constituer une fente pixellisée, dont chaque pixel homogénéise de manière originale la scène d'entrée en ALT et ACT.

Les guides d'ondes - fibres optiques ou éléments d'optique intégrée - peuvent être des guides de section fonctionnelle globalement rectangulaire avec un coin tronqué (par une frontière rectiligne) et trois coins à angle droit, ce qui forme un pentagone convexe à trois angles droits consécutifs.

Mais d'autres solutions sont utilisées dans des variantes, notamment des trapèzes, des hexagones, des octogones, ou des parallélogrammes. Des frontières curvilignes et non pas nécessairement rectilignes sont aussi utilisées dans certaines variantes pour la section fonctionnelle. Ainsi, à la place d'une troncature, une forme douce, arrondie, est utilisée dans certains modes de réalisation.

De plus, chacune des sections est de préférence convexe.

Optionnellement, les guides d'ondes optiques peuvent avoir une section fonctionnelle allongée le long de l'axe de symétrie.

La longueur des guides d'ondes entre leur entrée et leur sortie peut, optionnellement être comprise entre 1 cm et 15 cm.

Les guides d'ondes peuvent optionnellement être constitués de fibres optiques positionnées côte à côte entre deux plans d'un châssis. Ainsi, comme dans l'art antérieur, les guides d'ondes peuvent être des fibres optiques, notamment à base de silice, mais d'autres matériaux sont utilisables, comme des plastiques.

Les guides d'ondes peuvent alternativement être des éléments d'optique intégrée.

Les guides d'ondes peuvent optionnellement être maintenus rectilignes sur une majeure partie de leur étendue entre leur extrémité d'entrée et leur extrémité de sortie.

Le rapport entre les dimensions maximales de la section fonctionnelle des guides optiques selon l'axe de la fente et selon la direction perpendiculaire audit axe de la fente peut optionnellement être de l'ordre de 3, de 2 ou de 1, notamment.

- la longueur des guides optiques entre leur entrée et leur sortie peut optionnellement être comprise entre 1 cm et 15 cm,
- la fente peut optionnellement faire de 30 à 100 mm de hauteur,
- sa construction peut optionnellement résulter de l'alignement de par exemple entre 20 et 300 guides d'ondes optiques
- la dimension dans la direction d'alignement de chacun des guides d'ondes peut optionnellement être de 30 $\mu$m à 1 mm.

L'invention porte aussi sur une utilisation du composant optique tel que présenté ci-dessus.

Ainsi, le composant peut être placé pour préparer un échantillon spatial pour un instrument d'observation ou de mesure par dispersion spectrale.

Le composant optique peut être utilisé comme filtre spatial dans un spectro-imageur dispersif, aéroporté ou spatial, constituant ledit instrument d'observation ou de mesure, et résolu par exemple à moins de 10 nm par échantillon spectral.

L'invention porte donc sur un spectro-imageur dispersif, aéroporté ou spatial, comprenant une chaine optique en amont d'un élément disperseur, ladite chaine optique comprenant un composant optique tel qu'évoqué plus haut.

Le profil exact de la section (forme, dimension et donc, si la forme est rectangulaire, longueur, largeur et dimension du pan coupé ou de la troncature) ainsi que la longueur des guides optiques sont adaptés en fonction des paramètres instrumentaux et des performances visées.

La performance d'homogénéisation est significativement améliorée par rapport à l'art antérieur, alors que les autres performances sont préservées ou seulement marginalement impactées par rapport à la solution de fibres à section strictement rectangulaire.

L'invention est utilisée pour tous les instruments de type spectro-imageurs requérant une stabilité de la réponse spectrale indépendante de la scène mesurée, qu'il s'agisse de systèmes par dispersion ou non.

L'invention bénéficie des avantages offerts par des guides d'ondes courts (compacité, impact faible sur le reste de la conception de l'instrument, pas de contraintes particulières concernant l'aménagement) et n'a pas de faiblesse particulière face aux vibrations ou à d'autres environnements agressifs.

L'invention permet une performance d'homogénéisation supérieure aux solutions antérieures.

On évite de préférence de réintroduire une régularité particulière en transformant le rectangle en octogone régulier ou en cercle.

## Liste des figures

La figure 1 présente la section utile d'une fibre optique telle que des fibres optiques utilisées dans un spectro-imageur selon l'art antérieur.

La figure 2 montre la lumière présente en sortie de la fibre optique de la figure 1, à droite de la figure, pour une illumination en entrée montrée à gauche de la figure.

La figure 3 montre la même chose que la figure 2, mais pour une illumination en entrée différente.

La figure 4 montre la répartition de la lumière en sortie d'une fibre optique selon un mode de réalisation de l'invention.

Les figures 5 et 6 montrent la même chose que la figure 4 mais pour d'autres modes de réalisation de l'invention.

Les figures 7 et 8 montrent un assemblage conforme à l'invention, sous deux vues différentes.

Les figures 9 à 14 montrent des variantes entrant dans le cadre de l'invention.

**Description détaillée**

L'invention porte sur un instrument spectro-imageur, tel que représenté schématiquement ci-dessous, et dont le composant classique « fente (filtre spatial) » est remplacé par une fente homogénéisatrice 2D très performante, rendant ainsi la réponse spectrale de l'instrument quasi insensible aux non-uniformités de la scène observée.

L'instrument est donc constitué des éléments suivants :

- un télescope qui forme l'image de la scène d'observation à l'entrée de la fente homogénéisatrice 2D, dans un plan focal intermédiaire,

- une fente homogénéisatrice 2D sur laquelle est appliquée l'image de la scène par le télescope et qui transporte et homogénéise la scène depuis le plan focal image du télescope vers le plan focal objet du spectromètre. Hormis l'homogénéisation de faisceau dans les 2 directions (across track et along track), les caractéristiques optiques de l'art antérieur sont conservées, en particulier le f-number

- l'ouverture géométrique - et le spectre lumineux. La fente est basée sur des fibres optiques ou sur un composant d'optique intégrée. Elle va être décrite ci-après avec des fibres optiques de silice, mais plus généralement, chaque fibre peut être remplacée par un guide d'ondes optique qui serait constitué autrement qu'en fibre optique de silice, et notamment en utilisant la technologie des composants d'optique intégrée. Des fibres optiques en matériau autre que la silice - typiquement des polymères plastiques - peuvent aussi être utilisées.

- un spectromètre comprenant un élément dispersif (un réseau ou un prisme, par exemple) et qui dirige les ondes sortant de la fente (et qui ont pu transiter en en espace libre) vers le détecteur (typiquement, en amont de l'élément dispersif, la lumière est collimatée, puis en aval de l'élément dispersif, elle est focalisée),

- un détecteur recevant les ondes dispersées du spectromètre et faisant l'acquisition du signal en deux dimensions : spatiale et spectrale.

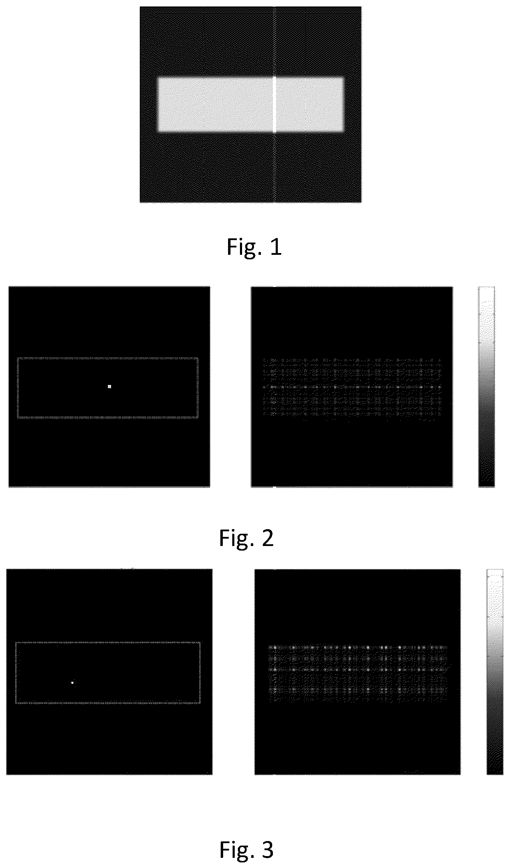

[Fig. 1] Les inventeurs se sont intéressés à une fibre optique de section rectangulaire, dont le rapport longueur de la section sur largeur de la section est fixe (il est choisi pour un équipement donné, en fonction de la vitesse de défilement de la scène). Cette section de fibre est représentée sur la figure 1. Elle a un rapport 3 entre la longueur et la largeur : 300 $\mu$m contre 100 $\mu$m. La fibre a une longueur de 5 cm pour la discussion. Néanmoins, l'invention a une application plus large que la géométrie de la section de la figure 1.

[Fig. 2] Les parties gauche et droite des figures 2 et 3 représentent respectivement l'entrée de la fibre et la sortie de la fibre, en situation d'illumination par une lumière donnée, de longueur d'onde, pour la discussion de 1 $\mu$m, même si une autre valeur de longueur d'onde comprise entre l'ultra-violet et l'infra-rouge moyen aurait pu être choisie.

Si la scène d'entrée est une gaussienne à 2 dimensions, soit essentiellement un point, visible sur la figure 2 en partie gauche, placée sur l'axe longitudinal de la fente, et donc de la fibre, alors l'énergie en sortie de fibre se disperse au cours du trajet de l'entrée vers la sortie dans toute la section, sous forme de petites tâches, comme cela se voit sur la partie droite de la figure 2.

[Fig. 3] Et si la gaussienne est décalée par rapport à l'axe longitudinal de la fibre, comme cela est représenté en figure 3, en partie gauche qui visualise l'entrée de la fibre, alors l'énergie en sortie, représentée en partie droite, est aussi dispersée, mais avec une répartition différente de celle obtenue sur la lumière est centrée à l'entrée. En particulier des lignes plus intenses sont présentes, ce qui n'est pas souhaitable pour une bonne homogénéisation.

Au final, comme on le voit en comparant les figures 2 et 3, la géométrie de la sortie est dépendante de la géométrie de l'entrée, ce qui n'est pas souhaité, puisqu'on cherche à obtenir une fonction de transfert indépendante de la scène.

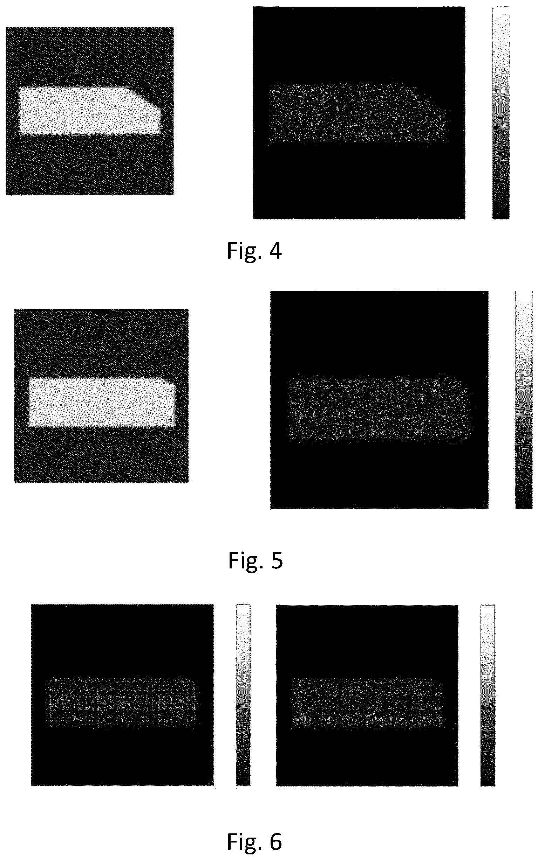

[Fig. 4] Comme on le voit en figure 4, la troncation d'un angle du rectangle, représentée schématiquement en partie gauche de la figure, avec un angle de 30° sur le grand côté du rectangle, et de 60° sur le petit côté du rectangle à mi-longueur de celui-ci, aboutit à une répartition du flux en sortie de fibre - montrée en partie droite de la figure pour une excitation gaussienne centrée en entrée de la fibre - plus aléatoire et finalement répartie de manière uniforme, du fait d'une dynamique homogène.

Les valeurs de 30° et 60° peuvent être remplacées par d'autres valeurs, par exemple 40° et 50°.

[Fig. 5] Comme on le voit en figure 5, même dans le cas d'une troncature légère, représentée en partie gauche de la figure, avec toujours un angle de 30° sur le grand côté du rectangle, et de 60° sur le petit côté du rectangle mais cette fois-ci à environ 1/7e de la longueur de celui-ci, un effet d'homogénéisation apparait en sortie de la fibre.

[Fig. 6] Par ailleurs, comme on le voit en figure 6, même avec une longueur de propagation - la longueur de la fibre - réduite (par rapport aux résultats présentés aux figures précédentes, pour lesquels la longueur de la fibre était de 5 cm) de l'ordre de 1 cm - en partie gauche de la figure - ou de 2 cm - en partie droite de la figure - l'homogénéisation est observée.

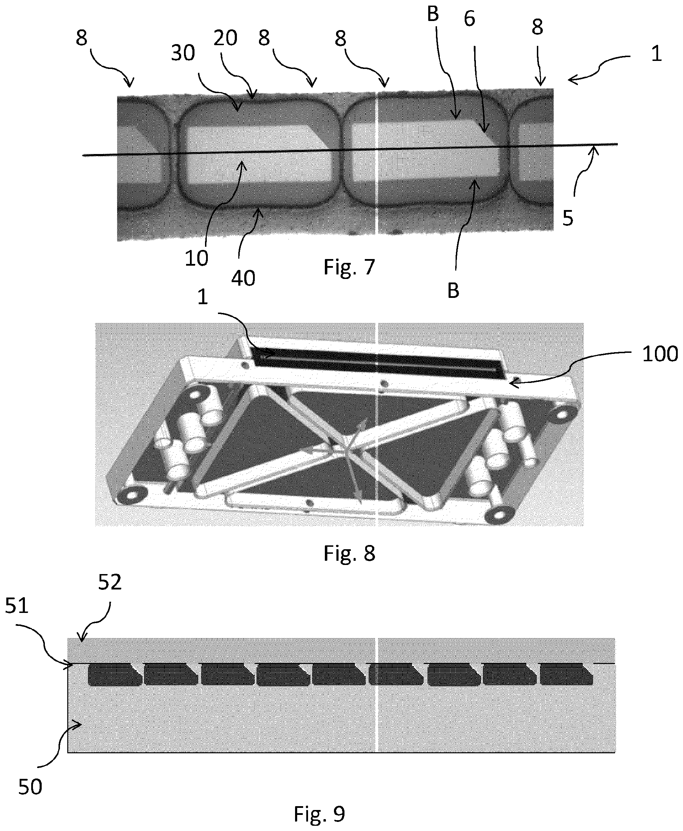

[Fig. 7] En figure 7, la fente 1 est constituée de 100 à 120 fibres placées le long d'un axe 5 qui constitue l'axe longitudinal de la fente 1.

Chaque cœur de fibre individuel constitue une sous-fente, dont le côté court définit la largeur de la fente et le côté long le champ de vision instantané d'un échantillon spatial dans la direction ACT.

Pour chacune des fibres, la section de transmission des ondes, dite section fonctionnelle 10 est un pentagone dérivant d'un rectangle avec un grand côté de 300 $\mu$m et un petit côté de 100 $\mu$m. L'axe 5 est la grande médiane de chacun des rectangles dont dérivent les pentagones.

L'axe 5 constitue l'axe médian parallèle aux grands côtés du rectangle dont dérive le pentagone. Ces grands côtés sont les bases B. le côté du pentagone qui est incliné par rapport aux bases B est une face inclinée 6.

Les angles des pentagones peuvent être arrondis. La troncature peut typiquement être faite à un peu moins de la mi-longueur du petit côté du rectangle (par exemple aux 4 10$^e$), avec un angle de 35° sur le grand côté du rectangle.

Les fibres sont chacune placées dans un gainage oblong 20 avec des grandes faces latérales planes longeant les grands côtés de la section fonctionnelle 10 et des petites faces latérales planes longeant les grands côtés de la section fonctionnelle 10.

Les grandes faces latérales et les petites faces latérales du gainage oblong 20 sont jointes par des surfaces arrondies tangentes entourant, pour trois d'entre elles les angles du pentagone.

A l'intérieur du volume défini par le gainage 20, le volume intermédiaire 30 circonférentiel entre la surface intérieure du gainage et l'extérieur de la section trapézoïdale rectangle est constitué de silice avec un dopant différent de la silice de la section fonctionnelle 10, de telle sorte que celle-ci transmette les ondes alors que le volume circonférentiel ne les transmet pas.

Les fibres sont aboutées par les petites faces latérales. Les troncatures de la section fonctionnelle de la fibre sont toutes placées à la même orientation - sur la figure 7 en haut à droite des rectangles, de telle sorte que chaque fibre se déduit de la voisine par une translation selon l'axe longitudinal. Néanmoins, les pentagones pourraient par exemple être disposés tête-bêche.

Une colle fluide 40 solidifiée entoure les gaines des fibres ainsi agencées qui sont maintenues entres deux plans d'un châssis.

[Fig. 8] En figure 8, on voit que l'alignement des fibres optiques formant la fente 1 est maintenu grâce à un châssis mécanique 100 prenant en compte les contraintes d'utilisation de l'équipement dans son environnement. Les guides d'ondes ont une longueur qui peut être de 7 cm environ, et qui peut, au-delà de cette valeur être comprise par exemple entre 1 cm et 15 cm.

La réalisation de fibre optique non symétrique se fait par le même procédé que pour le cas symétrique : on réalise une préforme de la géométrie souhaitée et on utilise ensuite une tour de fibrage qui reproduit cette forme à une échelle beaucoup plus petite.

[Fig. 9] En figure 9, un mode de réalisation des guides d'ondes optiques avec la technologie des composants optiques intégrés est présenté. Il est fondé sur un substrat 50, un milieu de confinement 51 et un superstrat 52 (air ou vide, par exemple), le milieu de confinement 51 étant d'indice optique plus élevé que le substrat et le superstrat. La fabrication peut comprendre des dépôts de couches minces, des masquages, des gravures (chimiques, ioniques, électroniques, ou par laser...), et/ou la diffusion d'ions localement dans un verre. Les géométries peuvent comprendre entre autres des arêtes, des nervures, des bandes, des fentes.

Sans vouloir être tenu par une théorie, il est fait les commentaires suivants.

Dans les guides d'ondes optiques multimodes, les modes présentent des répartitions spatiales de l'intensité du champ qui suivent les symétries de la géométrie du guide. Quand on modifie la géométrie de la section ou que l'on s'éloigne de ces géométries simples, la distribution de l'intensité des modes peut apparaître plus homogène. Certaines théories parlent de modes ergodiques ou modes speckle par analogie avec la figure de tavelures aléatoires en taille et en intensité observée lors de la diffusion de la lumière sur une surface rugueuse.

Ce comportement a été discuté théoriquement, dans le contexte de l'étude des ondes de toute nature qui se propagent dans des milieux présentant une dynamique chaotique des rayons. Dans les milieux dont les dimensions transverses sont grandes devant la longueur d'onde, les propriétés des ondes qui s'y propagent peuvent être décrites par une approche semi-classique ou approche géométrique des rayons.

Dans le cas de section de fibre optique disposant d'une géométrie simple telle que le cercle, le carré etc., la dynamique des rayons peut être perçue comme régulière. Mais si la géométrie du milieu induit une dynamique chaotique des rayons, c'est-à-dire si les rayons explorent de manière aléatoire le milieu et si l'évolution de la trajectoire suivie est sensible aux conditions initiales, il est possible que le champ des modes des ondes stationnaires qui s'établissent dans le milieu puisse être vu comme le résultat d'une superposition aléatoire d'ondes planes donnant lieu au comportement ergodique.

D'un point de vue théorique, il n'est néanmoins pas possible de résoudre analytiquement l'équation d'Helmholtz dans le cas de systèmes dont la géométrie induit une dynamique qui n'est pas régulière. Les modes individuels ne peuvent être calculés que numériquement à l'aide d'outils numériques de type solveur de modes, et/ou avec des méthodes numériques de type Beam Propagation Method pour simuler la propagation du champ le long de la fibre.

Lorsque la symétrie longitudinale et/ou transversale de la fibre est brisée, les modes transverses réguliers présents dans une fibre rectangulaire deviennent vraisemblablement, et sous toute réserve, des modes ergodiques conférant à la lumière une répartition spatiale de l'énergie statistiquement homogène très tôt dans sa progression le long de la fibre, ce qui permet de ne pas recourir à une longueur importante de fibre optique.

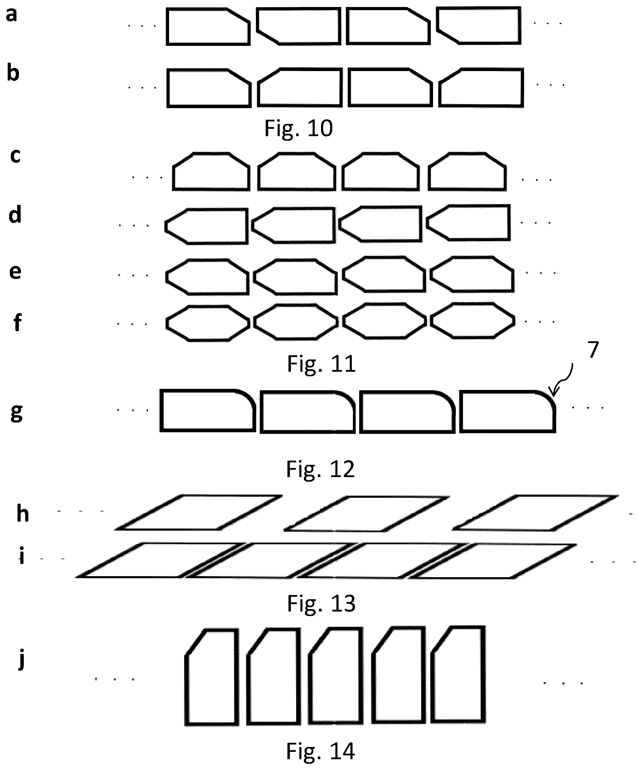

[Fig. 10] La figure 10 montre en partie haute (ligne a) une variante de mise en œuvre de l'invention. Les fibres optiques sont les mêmes que celles utilisées dans le mode de réalisation de la figure 7, mais une fibre sur deux a fait l'objet d'une rotation de 180° autour du centre du rectangle circonscrit au pentagone qu'elle forme. Elles sont aboutées par les petits côtés, et du fait de l'alternance, les petits côtés du cœur de fibre sans troncature sont aboutés entre eux et les petits côtés du cœur de fibre avec troncature sont aboutés entre eux, mais les troncatures sont positionnées de manière alternée sur une face de la fente, puis sur l'autre.

La figure 10 montre en partie basse (ligne b) une autre variante de mise en œuvre de l'invention. Les fibres optiques sont les mêmes que celles utilisées dans le mode de réalisation de la figure 7, mais une fibre sur deux a fait l'objet d'une permutation de sa sortie avec son entrée. Elles sont aboutées par les petits côtés, et du fait de l'alternance, les petits côtés du cœur de fibre sans troncature sont aboutés entre eux et les petits côtés du cœur de fibre avec troncature sont aboutés entre eux, et les troncatures sont positionnées toutes sur la même face de la fente.

[Fig.11] La figure 11 montre quatre autres variantes de mise en œuvre de l'invention. Les fibres optiques sont cette fois conçues pour avoir un cœur de fibre qui est un rectangle dont plusieurs sommets ont subi une troncature.

Dans la première ligne présentée (ligne c), deux sommets consécutifs sur un grand côté sont tronqués, les deux autres sommets étant non tronqués. Ainsi, il y a une face inclinée par rapport aux bases pour relier les bases l'une à l'autre d'un côté et une autre de l'autre.

Dans la deuxième ligne présentée (ligne d), deux sommets consécutifs sur un petit côté sont tronqués, les deux autres sommets étant non tronqués. Ainsi, il y a deux faces inclinées par rapport aux bases pour relier les bases l'une à l'autre d'un côté et aucune de l'autre.

Dans un mode de réalisation non représenté, deux sommets opposés par une diagonale sont tronqués et les deux autres ne le sont pas.

Sur le troisième exemple de la figure (ligne e), trois sommets sont tronqués. Dans le quatrième exemple (ligne f), les quatre sommets sont tronqués.

[Fig.12] La figure 12 montre une autre variante de mise en œuvre de l'invention (ligne g). Les fibres optiques sont cette fois conçues pour avoir un cœur de fibre qui est un rectangle dont un sommet a été arrondi de manière douce. Ainsi, au lieu d'une ligne droite définissant à ses extrémités des angles comme dans les autres modes de réalisation présentés ci-dessus, un arc de cercle convexe constituant une face incurvée 7 relit l'un des côtés à un côté adjacent.

A la place de cette forme incurvée convexe, d'autres formes incurvées convexes peuvent être utilisées.

[Fig. 13] La figure 13 montre une autre variante (ligne h). Les guides d'ondes sont de sections ayant la forme d'un parallélogramme. Les parallélogrammes successifs sont positionnés avec les côtés correspondants parallèles, ici les petits côtés. Chaque parallélogramme dérive d'un rectangle auquel on a appliqué deux troncatures droites à deux sommets opposés, les troncatures s'étendant chacune jusqu'au sommet voisin et le plus proche du sommet tronqué. En ligne h l'extrémité gauche, respectivement droite, d'un guide d'ondes ne débute pas sous l'extrémité droite, respectivement gauche, du guide d'ondes suivant, comme aux lignes a à g.

Ainsi, il y a, comme en ligne c, une face inclinée par rapport aux bases pour relier les bases l'une à l'autre d'un côté et une autre de l'autre.

La figure 13 montre aussi une autre variante (ligne i) où les guides d'ondes sont similaires à ceux de la ligne h, mais où pour augmenter l'énergie recueillie, l'extrémité gauche, respectivement droite, d'un guide d'ondes débute sous l'extrémité droite, respectivement gauche, du guide d'ondes suivant, ce qui diminue la surface des espaces non fonctionnels de la fente.

A nouveau, il y a une face inclinée par rapport aux bases pour relier les bases l'une à l'autre d'un côté et une autre de l'autre.

[Fig. 14] La figure 14 (ligne j) montre que la grande dimension de la section de guide d'ondes peut être transversale à l'axe longitudinal de la fente. Il en résulte que dans certains cas, l'instrument optique (télescope et spectro-imageur), présente une anamorphose liée à la fente optique, mais cette anamorphose peut être mise à profit, ou à l'inverse corrigée.

Dans l'exposé qui précède, on a mentionné des bases des guides d'ondes parallèles à l'axe longitudinal, et qui dans l'art antérieur, sont les grands côtés des rectangles. Dans le mode de réalisation de la figure 7, il s'agit des bases des pentagones (une grande base et une petite base).

Il est précisé ici que l'invention nécessite seulement que ces bases existent d'une manière ou d'une autre, qu'elles soient opposés l'une à l'autre et qu'elles soient seulement sensiblement parallèles l'une à l'autre et à l'axe longitudinal de la fente. Il n'est pas nécessaire qu'elles soient strictement parallèles l'une à l'autre et à l'axe longitudinal de la fente.

Ainsi, si les deux bases existent mais ne sont pas strictement rectilignes (du fait d'une entaille ou d'une excroissance ou encore d'une faible incurvation) ou strictement parallèles l'une à l'autre et donc à l'axe de la fente (du fait d'une faible inclinaison), l'invention peut être néanmoins mise en œuvre, avec éventuellement une petite perte d'intensité lumineuse captée.

## Revendications

1. Composant optique pour un instrument d'observation ou de mesure dans une gamme spectrale, ledit composant optique comprenant une pluralité de guides d'ondes optiques (8) au comportement multimode dans ladite gamme spectrale, et dont les extrémités d'entrée sont alignées le long d'un axe (5) qui est un axe longitudinal médian d'une fente optique (1) dudit composant optique, les sections desdits guides d'ondes ayant chacune deux bases (B) opposées l'une à l'autre sensiblement rectilignes et parallèles à l'axe (5) longitudinal médian de la fente, le composant optique étant **caractérisé en ce que** chacune des sections a, pour relier lesdites deux bases (B) et former le périmètre du guide d'ondes, au moins une face inclinée (6) par rapport aux bases (B) ou une face incurvée (7), distinguant ladite section d'un rectangle.

2. Composant optique pour un instrument d'observation ou de mesure selon la revendication 1, **caractérisé en ce que** les guides d'ondes optiques (8) ont une section fonctionnelle (10) allongée le long de dudit axe longitudinal médian (5).

3. Composant optique pour un instrument d'observation ou de mesure selon la revendication 1 ou la revendication 2, **caractérisé en ce que** la longueur des guides d'ondes (8) entre leur entrée et leur sortie est comprise entre 1 cm et 15 cm

4. Composant optique pour un instrument d'observation ou de mesure selon l'une des revendications 1 à 3, **caractérisé en ce que** les guides d'ondes sont constitués de fibres optiques (8) positionnées côte à côte entre deux plans d'un châssis (100).

5. Composant optique pour un instrument d'observation ou de mesure selon l'une des revendications 1 à 3, **caractérisé en ce que** les guides d'ondes sont des éléments d'optique intégrée.

6. Composant optique pour un instrument d'observation ou de mesure selon l'une des revendications 1 à 5, **caractérisé en ce que** les guides d'ondes (8) sont maintenus rectilignes sur une majeure partie de leur étendue entre leur extrémité d'entrée et leur extrémité de sortie.

7. Composant optique pour un instrument d'observation ou de mesure selon l'une des revendications 1 à 6, **caractérisé en ce que** chacune des sections est un pentagone convexe à trois angles droits consécutifs.

8. Composant optique pour un instrument d'observation ou de mesure selon l'une des revendications 1 à 7, **caractérisé en ce que** chacune des sections est convexe.

9. Spectro-imageur dispersif, aéroporté ou spatial, comprenant une chaine optique en amont d'un élément disperseur, **caractérisé en ce que** ladite chaine optique comprend un composant optique selon l'une des revendications 1 à 7.

## Patentansprüche

1. Optische Komponente für ein Beobachtungs- oder Messinstrument in einem Spektralbereich, wobei die optische Komponente eine Vielzahl von optischen Wellenleitern (8) mit Multimodus-Verhalten in dem Spektralbereich umfasst, und deren Eingangsenden entlang einer Achse (5) ausgerichtet sind, die eine mittlere Längsachse eines optischen Spalts (1) der optischen Komponente ist, die Abschnitte der Wellenleiter jeweils zwei einander gegenüberliegende, im Wesentlichen geradlinig und parallel zur mittleren Längsachse (5) des Spalts verlaufende Basen (B) aufweisen, wobei die optische Komponente **dadurch gekennzeichnet ist, dass** jeder der Abschnitte, um die beiden Basen (B) zu verbinden, und um den Umfang des Wellenleiters zu bilden, mindestens eine in Bezug auf die Basen (B) geneigte Fläche (6) oder eine gekrümmte Fläche (7) aufweist, wodurch sich der Abschnitt von einem Rechteck unterscheidet.

2. Optische Komponente für ein Beobachtungs- oder Messinstrument nach Anspruch 1, **dadurch gekennzeichnet,**

**dass** die optischen Wellenleiter (8) einen Funktionsabschnitt (10) aufweisen, der entlang der mittleren Längsachse (5) länglich ist.

3. Optische Komponente für ein Beobachtungs- oder Messinstrument nach Anspruch 1 oder Anspruch 2, **dadurch gekennzeichnet, dass** die Länge der Wellenleiter (8) zwischen ihrem Eingang und ihrem Ausgang zwischen 1 cm und 15 cm umfasst ist.

4. Optische Komponente für ein Beobachtungs- oder Messinstrument nach einem der Ansprüche 1 bis 3, **dadurch gekennzeichnet, dass** die Wellenleiter aus optischen Fasern (8) bestehen, die nebeneinander zwischen zwei Ebenen eines Rahmens (100) positioniert sind.

5. Optische Komponente für ein Beobachtungs- oder Messinstrument nach einem der Ansprüche 1 bis 3, **dadurch gekennzeichnet, dass** die Wellenleiter integrierte optische Elemente sind.

6. Optische Komponente für ein Beobachtungs- oder Messinstrument nach einem der Ansprüche 1 bis 5, **dadurch gekennzeichnet, dass** die Wellenleiter (8) über einen Hauptteil ihrer Erstreckung zwischen ihrem Eingangs- und ihrem Ausgangsende geradlinig gehalten werden.

7. Optische Komponente für ein Beobachtungs- oder Messinstrument nach einem der Ansprüche 1 bis 6, **dadurch gekennzeichnet, dass** jeder der Abschnitte ein konvexes Fünfeck mit drei aufeinanderfolgenden rechten Winkeln ist.

8. Optische Komponente für ein Beobachtungs- oder Messinstrument nach einem der Ansprüche 1 bis 7, **dadurch gekennzeichnet, dass** jeder der Abschnitte konvex ist.

9. Dispersives, luft- oder weltraumgestütztes Spektralabbildungsgerät, das eine optische Kette stromaufwärts eines Dispersionselements umfasst, **dadurch gekennzeichnet, dass** die optische Kette eine optische Komponente nach einem der Ansprüche 1 bis 7 umfasst.

**Claims**

1. Optical component for an observation or measuring instrument in a spectral range, said optical component comprising a plurality of optical waveguides (8) with multimode behavior in said spectral range, and whose input ends are aligned along an axis (5) which is a median longitudinal axis of an optical slit (1) of said optical component, the sections of said waveguides each having two bases (B) opposite each other substantially straight and parallel to the median longitudinal axis (5) of the slit, the optical component being **characterized in that** each of the sections has, to link said two bases (B) and form the perimeter of the waveguide, at least one face inclined (6) with respect to the bases (B) or a curved face (7), distinguishing said section from a rectangle.

2. Optical component for an observation or measuring instrument according to claim 1, **characterized in that** the optical waveguides (8) have a functional section (10) elongated along said median longitudinal axis (5).

3. Optical component for an observation or measuring instrument according to claim 1 or claim 2, **characterized in that** the length of the waveguides (8) between their input and output is between 1 cm and 15 cm.

4. Optical component for an observation or measuring instrument according to any one of claims 1 to 3, **characterized in that** the waveguides are made of optical fibers (8) positioned side by side between two planes of a chassis (100).

5. Optical component for an observation or measuring instrument according to any one of claims 1 to 3, **characterized in that** the waveguides are integrated optical elements.

6. Optical component for an observation or measuring instrument according to any one of claims 1 to 5, **characterized in that** the waveguides (8) are kept straight over a major part of their extent between their input end and their output end.

7. Optical component for an observation or measuring instrument according to any one of claims 1 to 6, **characterized in that** each of the sections is a convex pentagon with three consecutive right angles.

8. Optical component for an observation or measuring instrument according to any one of claims 1 to 7, **characterized in that** each of the sections is convex.

9. Dispersive spectro-imager, airborne or spaceborne, comprising an optical chain upstream of a dispersing element, **characterized in that** said optical chain comprises an optical component according to any one of claims 1 to 7.

Fig. 1

Fig. 2

Fig. 3

Fig. 4

Fig. 5

Fig. 6

Fig. 7

Fig. 8

Fig. 9

a

b

Fig. 10

c

d

e

f

Fig. 11

7

g

Fig. 12

h

i

Fig. 13

j

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2020027657 A1

- EP 3936841 A1

**Littérature non-brevet citée dans la description**

- *Sentinel-5/UVNS ICSO 2018- Proc. Of SPIE*, vol. 11180, 1118004-1

- **SIERK et al.** The Copernicus CO2M mission for monitoring anthropogenic carbon dioxide emissions from space. *Proc of SPIE*, vol. 11852, 118523M